(19) Europäisches Patentamt
European Patent Office
Office européen des brevets

(11) EP 0 829 452 B1

(12) FASCICULE DE BREVET EUROPEEN

(45) Date de publication et mention
de la délivrance du brevet:
20.03.2002 Bulletin 2002/12

(51) Int Cl.⁷: $C01B\ 17/05$, $B01D\ 53/52$

(21) Numéro de dépôt: 97402085.1

(22) Date de dépôt: 08.09.1997

(54) **Procédé et dispositif de traitement d'un gaz contenant de l'hydrogène sulfuré et de l'anhydride sulfureux, comportant une étape d'élimination du soufre par réfroidissement de l'effluent gazeux**

Verfahren und Vorrichtung zur Behandlung von Schwefelwasserstoff und Schwefeldioxid enthaltenden Gasen mit einer Schwefelentfernungsstufe mittels Kühlung von Abgasen

Process and apparatus for treatment of gases containing hydrogen sulphide and sulphur dioxide including a sulphur removal step by cooling of the exhaust gas

(84) Etats contractants désignés:
DE ES GB IT NL

(30) Priorité: 16.09.1996 FR 9611408

(43) Date de publication de la demande:
18.03.1998 Bulletin 1998/12

(73) Titulaire: INSTITUT FRANCAIS DU PETROLE
92852 Rueil-Malmaison Cedex (FR)

(72) Inventeurs:
• Viltard, Jean-Charles
  26000 Valence (FR)
• Lecomte, Fabrice
  92500 Rueil-Malmaison (FR)
• Dezael, Claude
  78600 Maisons Laffite (FR)

(56) Documents cités:
FR-A- 2 122 674          FR-A- 2 336 163
FR-A- 2 411 802

**Description**

La présente invention a pour objet un procédé et un dispositif de traitement d'un effluent gazeux d'une unité de Claus ou d'un gaz contenant de l'hydrogène sulfuré et de l'anhydride sulfureux.

Elle concerne notamment le traitement d'effluents d'unités Claus provenant notamment d'unités d'hydrodésulfuration et de craquage catalytique. Elle concerne aussi le traitement d'épuration du gaz naturel.

L'art antérieur est notamment illustré par les demandes de brevet FR-A-2 411 802 et FR-A-2 336 163.

Le procédé Claus est largement utilisé pour récupérer du soufre élémentaire à partir de charges gazeuses contenant de l'hydrogène sulfuré ($H_2S$). Cependant, les fumées émises par les installations d'unités de type Claus renferment, même après plusieurs étages catalytiques, des quantités non négligeables de gaz acides. Il est alors nécessaire de traiter ces effluents (tail gas) d'unités Claus pour éliminer la majorité des composés toxiques de façon à respecter les normes anti-pollution. Ces normes deviennent de plus en plus sévères et il est nécessaire d'améliorer en permanence la technologie existante.

Il est connu par exemple de récupérer, à partir d'une unité Claus, environ 95 % poids de soufre présent ; un traitement de cet effluent d'unité Claus (par une unité Claupol par exemple) permet d'atteindre par exemple 99,8 % en poids de soufre récupéré, à partir de la réaction :

$$2H_2S + SO_2 \rightleftarrows 3S + 2H_2O$$

qui met en oeuvre un milieu réactionnel constitué par un solvant organique et un catalyseur comprenant un sel alcalin ou alcalino-terreux d'un acide organique. La réaction s'effectue en général à contre-courant dans un réacteur-contacteur et sa température est contrôlée par passage du solvant qui a été soutiré à l'extrémité inférieure du réacteur par une pompe de circulation, dans un échangeur thermique, de façon à favoriser le taux le plus élevé de conversion en soufre, tout en évitant la formation de soufre solide. Le soufre est donc récupéré sous forme liquide. Le procédé, quoique très performant, est limité par différentes contraintes :

- l'équilibre thermodynamique de la réaction est tel que la réaction n'est jamais complète. De l'hydrogène sulfuré et du dioxyde de soufre restent en équilibre avec le soufre et l'eau formés. Typiquement, la quantité de soufre présent dans $H_2S$ et $SO_2$ qui n'ont pas réagi et que l'on retrouve dans l'effluent réactionnel (de Clauspol) correspond à environ 0,1 % du soufre total de la charge initiale de l'unité Claus. Une meilleure conversion peut être envisagée à une température opératoire plus faible mais cette température doit être maintenue au-dessus du point de congélation du soufre (environ 120 °C), sinon le réacteur serait obstrué par le soufre solide ;

- la présence de soufre liquide non séparé dans le réacteur-contacteur, qui est entraîné dans le solvant et le catalyseur qui circulent, et que l'on recycle dans le réacteur-contacteur. En effet, toutes les gouttelettes de soufre liquide ne sont pas séparées du solvant et la présence de soufre liquide entraîne irrémédiablement la présence de soufre gazeux dans l'effluent, due à la tension de vapeur du soufre. Par exemple, la quantité de soufre non récupéré attribuable à sa tension de vapeur est d'environ 0,1 % poids de soufre de la charge initiale.

L'objet de l'invention est de remédier aux inconvénients de l'art antérieur.

Un autre objet de l'invention est de satisfaire aux normes les plus sévères de lutte contre la pollution atmosphérique par les composés soufrés.

Un autre objet est de pouvoir modifier les installations existantes disposant d'une unité Claus et d'une unité de traitement des effluents de ladite unité (unité Clauspol) à un coût très faible.

On a constaté qu'en éliminant sensiblement tout le soufre vapeur dans les effluents d'unités de traitement de gaz et par exemple d'effluents de queue d'unités Claus, on pouvait récupérer jusqu'à 99,9 % du soufre total et minimiser ainsi la quantité de soufre rejeté dans l'atmosphère lors de l'incinération du gaz.

Plus précisément, l'invention concerne un procédé de traitement d'un gaz contenant de l'hydrogène sulfuré et de l'anhydride sulfureux dans lequel on met en contact dans au moins un réacteur-contacteur gaz-liquide, le gaz avec un solvant organique contenant un catalyseur et on récupère un effluent gazeux contenant de la vapeur d'eau et ne contenant sensiblement plus d'hydrogène sulfuré et d'anhydride sulfureux mais contenant du soufre sous forme vapeur.

Selon l'invention, on refroidit l'effluent gazeux en présence d'au moins un solvant organique dans au moins une zone de refroidissement (7) de manière à obtenir une suspension de cristaux de soufre dans ledit solvant, on sépare le soufre du solvant dans au moins une zone de séparation (30) et on récupère un gaz contenant de l'eau et ne contenant sensiblement plus de soufre vapeur, un solvant appauvri en soufre que l'on recycle dans la zone de refroidissement (7) et du soufre (15), provenant de ladite zone de séparation.

Le solvant organique peut être refroidi de différentes façons :

- Selon une première variante, si le solvant organique est miscible à l'eau, il peut être refroidi par échange de chaleur dans un échangeur de chaleur, avant d'être mélangé à l'effluent gazeux à épurer, par un appoint d'eau à une température inférieure à celle du solvant organique dont la chaleur de vaporisation au contact de l'effluent gazeux permettra d'abaisser la température du mélange, ou par une combinaison des deux étapes ci-dessus. De préférence, on refroidira par injection d'eau.

- Selon une deuxième variante, si le solvant organique n'est pas miscible à l'eau, il peut être refroidi de la même manière que celles selon la première variante. De préférence, on refroidira par échange de chaleur.

Les différents types de solvants peuvent être les suivants :

- Dans la catégorie des solvants insolubles dans l'eau, on trouve les hydrocarbures de température d'ébullition à pression atmosphérique supérieure à 200 °C, et de préférence le dodécane, le tridécane, le naphta de points d'ébullition compris entre 225°C et 335°C.

- Dans la catégorie des solvants solubles dans l'eau, de température d'ébullition à pression atmosphérique supérieure à 200 °C, on trouve les polyols de 3 à 15 atomes de carbone, et de préférence le glycérol, le thioglycol et le cyclohexane diméthyléthanol, les esters d'acides de 5 à 15 atomes de carbone et plus particulièrement le triméthylpentanediol mono-isobutyrate et le diméthyl adipate, les éthers de glycol de 5 à 15 atomes de carbone et avantageusement le butoxytriglycol, l'éthoxytriglycol, le diéthylène glycol butyléther, l'éthylène glycol phényléther, le terpinyl éthylène glycol mono benzyl éther, l'éthylène glycol butylphényléther, le diéthylène glycol, le diéthylène glycol diméthyléther, le diéthylène glycol dibutyléther, le triéthylène glycol, le tétraéthylène glycol diméthyléther, le propylène n-butyléther, le dipropylène n-butyléther, le tripropylène n-butyléther, et le polyéthylène glycol de masse molaire 200, 300, 400 ou 600.

L'effluent gazeux au contact du solvant organique contenant de l'eau peut être refroidi à une température inférieure à la température de fusion du soufre et de préférence entre 50 °C et 100 °C. L'eau contribue à ce refroidissement puisqu'elle peut s'évaporer en partie de la solution, au contact avec le gaz chaud.

Lors du refroidissement, le soufre vapeur se solidifie et selon une autre caractéristique de l'invention, ce mélange triphasique gaz, soufre solide, solvant organique liquide est envoyé sur un contacteur où le liquide capte toutes les particules de solide qui s'y retrouvent en suspension.

Selon une autre caractéristique de l'invention, le soufre peut être séparé du solvant pour être recyclé dans le réacteur-contacteur principal sous forme liquide après avoir été fondu, ou récupéré dans une quantité minime de solvant.

Le solvant appauvri en soufre sortant de la zone de séparation peut être introduit dans au moins un filtre ou un hydrocyclone pour le débarrasser au moins en partie des cristaux de soufre, avant d'être introduit dans la zone de mise en contact et de refroidissement.

Il est avantageux de recycler la phase solvant récupérée de la zone de séparation, dans la zone de refroidissement.

Le procédé selon l'invention et ses moyens de mise en oeuvre peuvent être adaptés au procédé et au dispositif conventionnels de traitement d'effluents gazeux d'unités Claus.

Ainsi, le réacteur-contacteur comprend généralement un échangeur thermique ou des moyens de chauffage équivalents dans sa partie inférieure et plus précisément dans sa zone de décantation. On peut y introduire une partie au moins du soufre qui a été séparé du solvant lors de l'étape de séparation et soutirer le soufre liquide de ladite zone de décantation du réacteur-contacteur. On peut ainsi remodeler les unités existantes.

Les solvants les plus utilisés sont le mono- ou poly-alkylènes glycols, les esters de mono- ou poly-alkylènes glycols ou les éthers de mono- ou poly-alkylènes glycols tels que décrits dans les brevets FR 2 115 721 (US 3 796 796), FR 2 122 674 et FR 2 138 371 (US 3 832 454), incorporés comme références. Les catalyseurs sont habituellement ceux décrits dans ces mêmes brevets et plus particulièrement des sels alcalins d'acides organiques faibles tels que l'acide benzoïque et l'acide salicylique.

Selon une caractéristique du procédé, on peut soutirer au moins en partie une solution monophasique dudit solvant organique, de la partie inférieure du réacteur-contacteur (2), on la refroidit de façon à éliminer une partie au moins de la chaleur de réaction mise en jeu dans le réacteur-contacteur et on la recycle (1) dans le réacteur-contacteur.

La mise en oeuvre du procédé peut être réalisée, par exemple, selon deux variantes, dans un réacteur vertical :

- soit on opère une mise en contact du gaz à traiter et du solvant à co-courant. Dans ce cas, le gaz à traiter est introduit en tête du réacteur-contacteur ainsi que le solvant recyclé provenant d'un soutirage latéral en partie inférieure du réacteur. L'effluent gazeux est soutiré aussi latéralement, au dessus du solvant à recycler, en partie inférieure du réacteur.

- soit on opère une mise en contact du gaz à traiter et du solvant à contre-courant. Dans ce cas le gaz à traiter est introduit latéralement en partie inférieure du réacteur-contacteur, le solvant provenant de la partie inférieure du réacteur est recyclé latéralement en partie supérieure, le soufre est récupéré en fond de réacteur tandis que l'effluent gazeux destiné à être refroidi est soutiré en tête.

Mais on pourrait aussi mettre en oeuvre le procédé dans un réacteur horizontal.

L'invention concerne aussi un dispositif pour le traitement d'un gaz contenant de l'hydrogène sulfuré et de l'anhydride sulfureux. Ce dispositif comprend un réacteur-contacteur gaz liquide, des moyens d'alimentation (3) en gaz à traiter et des moyens d'alimentation (1) en solvant organique contenant un catalyseur, des moyens de récupération du soufre (25) et des moyens de sortie (20) d'un effluent gazeux contenant du soufre sous forme vapeur, le dispositif étant caractérisé en ce qu'il comporte au moins un moyen de mise en contact et de refroidissement (7) de l'effluent gazeux, délivrant un effluent triphasique, ayant une entrée connectée aux moyens de sortie (20) de l'effluent et à des moyens de recyclage (6, 13) d'un solvant de refroidissement, des moyens de séparation (30) dudit effluent triphasique connectés au moyen de refroidissement adaptés à séparer du gaz épuré du soufre et comportant des moyens (17) d'évacuation du gaz épuré, des moyens (15) de soutirage du soufre et des moyens (14) de récupération du solvant connectés aux moyens de recyclage (6, 13) du solvant de refroidissement.

Par moyen de mise en contact et de refroidissement, on entend une zone de refroidissement ou contacteur dans laquelle sont introduits l'effluent et le solvant, dont la température est inférieure à celle de l'effluent. Selon une première variante, les moyens de recyclage du solvant de refroidissement peuvent comporter un échangeur thermique adapté à refroidir ledit mélange avant qu'il soit mis en contact avec l'effluent gazeux à épurer, provenant du réacteur-contacteur.

Selon une deuxième variante, les moyens de recyclage du solvant de refroidissement peuvent comporter une alimentation d'appoint en eau froide contribuant à refroidir le solvant et éventuellement un échangeur thermique.

Selon une autre caractéristique du dispositif, il est avantageux de disposer, en sortie de la zone de refroidissement, de moyens de contact de l'effluent de la zone de refroidissement avec un garnissage de contact pour assurer le transfert du soufre solide dans la phase liquide.

Le solvant organique de refroidissement, refroidi par échange de chaleur et/ou par un appoint d'eau peut contenir encore du soufre en suspension. On peut le séparer par des moyens de séparation appropriés (filtre ou hydrocyclone par exemple, non représenté) et le récupérer tandis que le solvant désaturé et refroidi est recyclé dans la zone de refroidissement pour refroidir l'effluent gazeux.

L'invention sera mieux comprise au vu des figures suivantes illustrant de manière schématique plusieurs modes de réalisation du procédé, parmi lesquelles :

• la figure 1 montre un dispositif de traitement de gaz soufrés comportant notamment une zone de refroidissement de l'effluent gazeux contenant du soufre suivie d'une zone de séparation du soufre,

• la figure 2 illustre l'art antérieur.

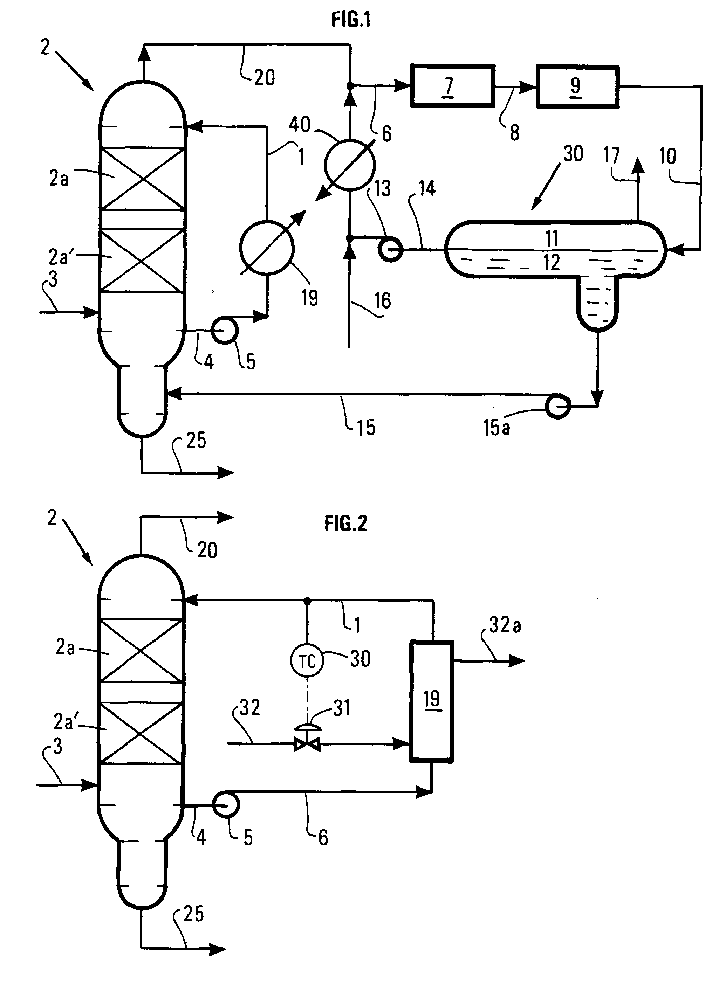

Selon la figure 1, le dispositif comprend un réacteur-contacteur (2) gaz liquide, de préférence vertical, opérant avantageusement à contre-courant à une température de 120 °C par exemple et contenant deux lits de garnissages 2a et 2a' en matériaux céramique (selles Intalox, ou anneaux de Raschig, par exemple).

Une ligne 3 alimente latéralement en une charge soufrée qui est un effluent d'une unité Claus par exemple, la partie inférieure du réacteur-contacteur sous le garnissage, tandis qu'une ligne 1 introduit latéralement, dans sa partie supérieure, au-dessus du garnissage, une solution recyclée de solvant, du polyéthylène glycol 400 par exemple et du catalyseur, du salicylate de sodium par exemple.

Le gaz épuré contenant généralement 300 ppm de soufre vapeur et de la vapeur d'eau est évacué vers la partie supérieure du réacteur-contacteur par une ligne 20.

Cet effluent 20 du réacteur-contacteur est refroidi par un mélange d'une solution glycolée, le même solvant PEG 400 par exemple, provenant d'une ligne 14 équipée d'une pompe 13 et d'un appoint d'eau amené par une ligne 16. L'effluent 20 peut aussi être refroidi par contact avec le solvant (PEG 400) refroidi par un échangeur thermique 40. Le mélange est introduit par une ligne 6 dans un contacteur refroidisseur 7, où l'eau évaporée jusqu'à l'équilibre assure le refroidissement de l'effluent gazeux à 95 °C par exemple. Le soufre vapeur passe à l'état solide dans la solution glycolée déjà saturée en soufre. Le passage du soufre dans la phase liquide s'effectue donc dans le contacteur 7 multifonctionnel ayant des caractéristiques de mise en contact suffisantes. Cependant, ce contact peut être amélioré par passage, via une ligne 8, de l'effluent du contacteur-refroidisseur dans un autre contacteur 9 comprenant une masse de contact appropriée, des selles Intalox par exemple. Les contacteurs 7 et 9 peuvent être réunis en un seul appareil.

L'effluent de contacteur 9 est envoyé par une ligne 10 dans un séparateur triphasique 30 où ont lieu la séparation complète du gaz 11 et du liquide 12 et la séparation partielle du soufre solide et du liquide. Le gaz épuré est soutiré en tête du séparateur 30 par une ligne 17. Une phase riche en soufre et contenant une faible quantité de solvant est soutirée en fond du séparateur triphasique 30 et envoyée par une ligne 15 et une pompe 15a à l'extrémité inférieure du réacteur-contacteur 2 pour y être fondu à 125 °C environ. Une ligne 25 évacue le soufre total fondu en fond du réacteur.

On soutire par ailleurs en fond de réacteur 2 une partie au moins d'une solution monophasique de solvant et de catalyseur par une ligne 4, que l'on recycle par une pompe 5, latéralement, dans la partie supérieure du réacteur-contacteur grâce à la ligne 1, après l'avoir refroidie dans un échangeur thermique 19. Selon une variante non illustrée, le solvant après avoir été refroidi, contient du soufre en suspension que l'on sépare dans un hydrocyclone, et le solvant ainsi appauvri en soufre est introduit dans la zone de refroidissement 7 pour refroidir l'effluent gazeux 20.

L'invention sera mieux comprise par les exemples suivants :

Exemple 1 (figure 2) comparatif :

On introduit, par une ligne 3 un gaz de queue d'unité Claus, dont le débit est de 12 300 Nm$^3$/h, dans un réacteur-contacteur vertical constitué d'une colonne 2 contenant deux lits de garnissage 2a et 2a' et on le met en contact à 125 °C avec un solvant organique contenant un catalyseur soluble introduit par une ligne 1.

Le garnissage utilisé dans l'exemple est constitué de 2 lits de selles ("Intalox" en céramique de surface spécifique de 250 m$^2$/m$^3$) et ayant la propriété de retenir les faibles quantités de sels de sodium formés lors de la réaction.

Le solvant organique utilisé est un polyéthylène glycol de masse moléculaire 400 et le catalyseur soluble est du salicylate de sodium à une concentration de 100 millimoles/kg de solvant.

Le solvant est recyclé entre le bas et le haut du réacteur par les lignes 4 et 1 à un débit de 500 m3/h, grâce à la pompe de circulation 5 à travers un échangeur de température 19, contrôlé et régulé en température par un système de mesure-contrôle 30 et 31a permettant d'injecter de l'eau chaude à 80 °C dans l'échangeur par la ligne 32, et de l'évacuer par la ligne 32a. La température du solvant recyclé est de 123 °C.

Le gaz épuré sort du réacteur par la ligne 20. Le soufre formé décante en fond de réacteur et est extrait par la ligne 25 à raison de 332 kg/h.

Les compositions des gaz d'entrée et de sortie de l'unité sont données dans le tableau suivant :

| Constituants | Gaz entrée (3) % Vol. | Gaz sortie (20) % Vol. |
|---|---|---|
| $H_2S$ | 1,234 | 0,014 |
| $SO_2$ | 0,617 | 0,007 |
| $CO_2$ | 4,000 | 4,038 |
| COS | 0,015 | 0,009 |
| $CS_2$ | 0,015 | 0,009 |
| $S_v$* | 0,14 | 0,03 |
| $N_2$ | 60 | 60,396 |
| $H_2O$ | 34 | 35,384 |
| Somme des composés soufrés (comptée en soufre) | 2,036 | 0,065 |

*Sv = soufre vapeur + soufre vésiculaire

Le rendement en composés soufrés dans le réacteur est égal à :

$$\frac{(\% \text{ composés soufrés entrée - } \% \text{ composés soufrés sortie})}{\% \text{ composés soufrés entrée}} \times 100 =$$

$$\frac{(2,036 - 0,078)}{2,036} \times 100 = 96,2 \, \%$$

Le rendement de l'ensemble unité Claus réalisant 94 % de rendement + unité de finition selon l'art antérieur est égal à :

$$94 + \frac{(6 \times 96,2)}{100} = 99,77 \ \%$$

Exemple 2 (fig 1):

On utilise le réacteur de l'exemple 1 contenant 2 lits de selles Intalox en céramique pour réaliser le contact entre le gaz de queue de l'unité Claus avec le même solvant contenant le même catalyseur soluble.

On introduit avec le même débit (12 300 Nm$^3$/h) par la ligne 3 le gaz de queue de Claus dans le réacteur et par la ligne 1 le solvant contenant le catalyseur à raison de 500 m$^3$/h grâce à la pompe 5, la température du solvant étant maintenue à 125 °C par l'échangeur 19.

L'effluent gazeux du réacteur est mélangé avec un mélange solution glycolée-appoint d'eau foide introduite par la ligne 16, dans un contacteur 7 de refroidissement où l'eau évaporée jusqu'à l'équilibre assure le refroidissement de l'effluent gazeux à 95 °C. Le soufre vapeur passe à l'état solide dans l'appareil 7.

Le passage du soufre dans la phase liquide qui est une solution glycolée déjà saturée en soufre se fait dans l'appareil 9 qui contient une masse de contact constituée de selles Intalox.

L'effluent issu du contacteur 9 est envoyé dans le séparateur triphasique 30 où ont lieu les séparations du gaz et du liquide et du soufre solide et du liquide.

La phase riche en soufre est envoyée dans la section de séparation et de fusion du réacteur-contacteur à 125 °C où elle est récupérée et fondue et où elle rejoint la production du réacteur principal.

Les compositions des gaz entrée et sortie de l'unité sont indiquées dans le tableau suivant:

| Constituants | Gaz entrée (3) % Vol. | Gaz sortie (17) % Vol. |
|---|---|---|
| H$_2$S | 1,234 | 0,014 |
| SO$_2$ | 0,617 | 0,007 |
| CO$_2$ | 4,000 | 4,038 |
| COS | 0,015 | 0,006 |
| CS$_2$ | 0,015 | 0,004 |
| S$_v$* | 0,14 | 0,03 |
| N$_2$ | 60 | 60,396 |
| H$_2$O | 34 | 35,384 |
| somme des composés soufrés | 2,036 | 0,038 |

Le rendement en composés soufrés dans le réacteur est égal à :

$$\frac{(2,036 - 0,038)}{2,036} \times 100 = 98,13\%$$

Le rendement de l'ensemble unité Claus réalisant 94 % de rendement + unité de finition est égal à:

$$94 + \frac{(6 \times 98,13)}{100} = 99,88 \ \%$$

## Revendications

**1.** Procédé de traitement d'un gaz contenant de l'hydrogène sulfuré et de l'anhydride sulfureux dans lequel on met en contact dans au moins un réacteur-contacteur (2) gaz-liquide le gaz (3) avec un solvant organique (1) contenant un catalyseur, on récupère séparément du réacteur-contacteur du soufre liquide et un effluent gazeux (20) contenant de la vapeur d'eau et ne contenant sensiblement plus d'hydrogène sulfuré et d'anhydride sulfureux mais contenant du soufre sous forme vapeur, le procédé étant **caractérisé en ce qu'**on refroidit ledit effluent gazeux (20) en présence d'au moins un solvant organique dans au moins une zone de refroidissement (7) de manière à obtenir une suspension de cristaux de soufre dans ledit solvant, on sépare le soufre du solvant dans au moins une zone de séparation (30) et on récupère un gaz contenant de l'eau et ne contenant sensiblement plus de soufre vapeur, un solvant appauvri en soufre que l'on recycle dans la zone de refroidissement (7) et du soufre (15), provenant de ladite zone de séparation.

**2.** Procédé selon la revendication 1 dans lequel le solvant organique de refroidissement est refroidi par échange de chaleur dans un échangeur de chaleur (40).

**3.** Procédé selon la revendication 1 ou 2 dans lequel le solvant organique de refroidissement est refroidi par un appoint d'eau (16) à une température inférieure à celle du solvant organique.

**4.** Procédé selon l'une des revendications 1 à 3, dans lequel l'effluent gazeux est refroidi à une température inférieure à la température de fusion du soufre et de préférence à une température de 50 à 100 °C.

**5.** Procédé selon l'une des revendications 1 à 4, dans lequel le soufre est soutiré de la zone de séparation (30) dans une quantité minime de solvant, il est recyclé en suspension dans le fond du réacteur-contacteur (2) et on récupère du soufre liquide.

**6.** Procédé selon l'une des revendications 1 à 5 dans lequel le solvant appauvri en soufre sortant de la zone de séparation (30) est introduit dans au moins un filtre ou un hydrocyclone pour le débarrasser au moins en partie des cristaux de soufre, avant d'être introduit dans la zone de refroidissement (7).

**7.** Procédé selon l'une des revendications 1 à 6 dans lequel on soutire au moins en partie une solution monophasique dudit solvant organique de la partie inférieure du réacteur-contacteur (2), on la refroidit de façon à éliminer une partie au moins de la chaleur de réaction mise en jeu dans le réacteur-contacteur et on la recycle (1) dans le réacteur-contacteur.

**8.** Procédé selon l'une des revendications 1 à 7 dans lequel le solvant organique (1) et le solvant organique de refroidissement sont un même solvant.

**9.** Procédé selon l'une des revendications 1 à 8, dans lequel le solvant organique de refroidissement, refroidi par échange de chaleur et/ou par un appoint d'eau contient du soufre en suspension, on sépare ledit soufre du solvant organique de refroidissement et on refroidit ledit effluent gazeux (20) par le solvant organique appauvri en soufre.

**10.** Procédé selon l'une des revendications 1 à 9, selon lequel on le met en oeuvre dans un dispositif comprenant un réacteur-contacteur (2) gaz-liquide, des moyens d'alimentation (3) en gaz à traiter et des moyens d'alimentation (1) en solvant organique contenant un catalyseur, des moyens de récupération du soufre (25) et des moyens de sortie (20) d'un effluent gazeux contenant du soufre sous forme vapeur à la partie supérieure du réacteur, le dispositif comporte en outre au moins un moyen de mise en contact et de refroidissement (7) de l'effluent gazeux, délivrant un effluent triphasique, ayant une entrée connectée aux moyens de sortie (20) de l'effluent et à des moyens de recyclage (6, 13) d'un solvant de refroidissement, des moyens de séparation (30) du dit effluent triphasique connectés au moyen de refroidissement adaptés à séparer du gaz épuré du soufre et comportant des moyens (17) d'évacuation du gaz épuré, des moyens (15) de soutirage du soufre et des moyens (14) de récupération du solvant connectés aux moyens de recyclage (6, 13) du solvant de refroidissement.

**11.** Procédé selon la revendication 10, dans lequel les moyens de recyclage du solvant de refroidissement comportent un échangeur thermique (40) adapté à refroidir ledit solvant.

**12.** Procédé selon la revendication 10, dans lequel les moyens de recyclage du mélange solvant-eau comportent une alimentation (16) d'appoint en eau.

**13.** Procédé selon l'une des revendications 10 à 12, dans lequel au moins un contacteur (9) est interposé entre les moyens de refroidissement (7) et les moyens de séparation (30).

**14.** Procédé selon l'une des revendications 10 à 13 dans lequel le réacteur contacteur (2) comporte à la partie inférieure un moyen (4) de soutirage d'une solution monophasique, des moyens (19) de contrôle de la température de la solution associés à un échangeur thermique et connectés au moyen (4) de soutirage de la solution et des moyens (1) de recyclage de la solution monophasique dans le réacteur-contacteur.

**15.** Procédé selon l'une des revendications 10 à 14, dans lequel les moyens (15) de soutirage du soufre sont connectés à la partie inférieure du réacteur-contacteur.

**16.** Procédé selon l'une des revendications 10 à 15 dans lequel un moyen de séparation du soufre en suspension est intégré entre l'échangeur thermique (40) et/ou l'appoint d'eau (16) et le moyen de mise en contact et de refroidissement (7).

**Claims**

1. A process for the treatment of a gas containing hydrogen sulphide and sulphur dioxide, in which the gas (3) is brought into contact with an organic solvent (1) containing a catalyst in at least one gas-liquid reactor-contactor (2), and sulphur is recovered and separately a gaseous effluent (20) which contains water vapour, which substantially no longer contains hydrogen sulphide and sulphur dioxide but which contains sulphur in vapour form is recovered, the process being **characterized in that** said gaseous effluent (20) is cooled by at least one organic solvent in at least one cooling zone (7) so as to obtain a suspension of sulphur crystals in said solvent, the sulphur is separated from the solvent in at least one separation zone (30) and a gas containing water and substantially no longer containing sulphur vapour is recovered, also a solvent is recovered which is depleted in sulphur which is recycled to the cooling zone (7), also sulphur (15) is recovered from said separation zone.

2. A process according to claim 1, in which the organic cooling solvent is cooled by heat exchange in a heat exchanger (40).

3. A process according to claim 1 or claim 2, in which the organic cooling solvent is cooled by adding water (16) at a temperature which is lower than that of the organic solvent.

4. A process according to any one of claims 1 to 3, in which the gaseous effluent is cooled to a temperature which is lower than the melting point of sulphur, preferably between 50°C and 100°C.

5. A process according to any one of claims 1 to 4, in which the sulphur recovered from the separation zone (30) in a minimal quantity of solvent is recycled in suspension to the bottom of the reactor-contactor (2) and liquid sulphur is recovered.

6. A process according to any one of claims 1 to 5, in which the solvent which is depleted in sulphur leaving the separation zone (30) is introduced into at least one filter or at least one hydrocyclone to free at least a portion of the sulphur crystals before being introduced into the cooling zone (7).

7. A process according to any one of claims 1 to 6, in which at least part of a single-phase solution is extracted from said organic solvent from the bottom portion of the reactor-contactor (2), it is cooled to eliminate at least a portion of the heat of reaction released in the reactor-contactor and it is recycled (1) to the reactor-contactor.

8. A process according to any one of claims 1 to 7, in which the organic solvent (1) and the organic cooling solvent are the same solvent.

9. A process according to any one of claims 1 to 8, in which the organic cooling solvent, cooled by heat exchange and/or by adding water, contains sulphur in suspension, said sulphur is separated from the organic cooling solvent and said gaseous effluent (20) is cooled by the organic solvent which is depleted in sulphur.

10. A process according to any one of claims 1 to 9, implemented in an apparatus for treating a gas containing hydrogen sulphide and sulphur dioxide, comprising a liquid-gas reactor-contactor (2), means (3) for supplying gas to be treated and means (1) for supplying an organic solvent containing a catalyst, means (25) for recovering sulphur and outlet means (20) for a gaseous effluent containing sulphur in vapour form at the upper part of the reactor, the apparatus further comprising at least one means (7) for contacting and cooling the gaseous effluent, delivering a three-phase effluent, having an inlet connected to the effluent outlet means (20) and to means (6, 13) for recycling a cooling solvent, means (30) for separating said three-phase effluent connected to the cooling means, adapted to separate purified gas from sulphur and comprising means (17) for evacuating purified gas, means (15) for extracting sulphur and means (14) for recovering solvent connected to the means (6, 13) for recycling the cooling solvent.

11. An apparatus according to claim 10, in which the cooling solvent recycling means comprises a heat exchanger (40) adapted to cool said solvent.

**12.** An apparatus according to claim 10, in which the means for recycling the solvent-water mixture comprises a supply (16) for adding water.

**13.** An apparatus according to any one of claims 10 to 12, in which at least one contactor (9) is interposed between the cooling means (7) and the separation means (30).

**14.** An apparatus according to any one of claims 10 to 13, in which the reactor-contactor (2) comprises, at its lower portion, a means (4) for extracting a single-phase solution, means (19) for controlling the temperature of the solution associated with a heat exchanger and connected to a means (4) for extracting the solution and means (1) for recycling the single-phase solution to the reactor-contactor.

**15.** An apparatus according to any one of claims 10 to 14, in which the means (15) for extracting sulphur are connected to the lower portion of the reactor-contactor.

**16.** An apparatus according to any one of claims 10 to 15, in which the means for separating sulphur in suspension is integrated between the heat exchanger (40) and/or the water addition (16) and the means for contacting and cooling (7).

**Patentansprüche**

**1.** Verfahren zur Behandlung eines Schwefelwasserstoff und Schwefeldioxid enthaltenden Gases, bei dem man in wenigstens einem Gas-Flüssig-Kontaktreaktor (2) das Gas (3) mit einem organischen Lösungsmittel (1) in Kontakt bringt, das den Katalysator enthält, man getrennt vom Kontaktreaktor flüssigen Schwefel und einen Gasabstrom (20) gewinnt, der Wasserdampf enthält und im wesentlichen keinen Schwefelwasserstoff und kein Schwefeldioxid mehr enthält, sondern dampfförmigen Schwefel (20) enthält, wobei das Verfahren **dadurch gekennzeichnet ist, dass** der Gasabstrom (20) in Gegenwart wenigstens eines organischen Lösungsmittels in wenigstens einer Kühlzone (7) derart gekühlt wird, dass eine Schwefelkristallsuspension im Lösungsmittel erhalten wird, man den Schwefel vom Lösungsmittel in wenigstens einer Trennzone (30) trennt und man ein Wasser enthaltendes und im wesentlichen keinen Schwefeldampf mehr enthaltendes Gas, ein an Schwefel verarmtes Lösungsmittel, das in die Kühlzone (7) rezykliert wird und Schwefel (15) gewinnt, der von der Trennzone kommt.

**2.** Verfahren nach Anspruch 1, wobei das organische Kühllösungsmittel durch Austausch in einem Wärmetauscher (40) gekühlt wird.

**3.** Verfahren nach Anspruch 1 oder 2, wobei das organische Kühllösungsmittel durch einen Wasserzusatz (16) auf eine Temperatur unterhalb jener des organischen Lösungsmittels gekühlt wird.

**4.** Verfahren nach einem der Ansprüche 1 bis 3, wobei der Gasabstrom auf die Schmelztemperatur des Schwefels und vorzugsweise auf eine Temperatur von 50 bis 100°C gekühlt wird.

**5.** Verfahren nach einem der Ansprüche 1 bis 4, wobei der Schwefel von der Trennzone (30) in einer minimalen Lösungsmittelmenge abgezogen wird, er in Suspension zum Boden des Kontaktreaktors (2) rezykliert wird und man den flüssigen Schwefel gewinnt.

**6.** Verfahren nach einem der Ansprüche 1 bis 5, wobei das an Schwefel verarmte Lösungsmittel, das aus der Trennzone (30) austritt in wenigstens einen Filter oder einem Hydrozyklon eingeführt wird, um es wenigstens teilweise von Schwefelkristallen zu befreien, bevor es in die Kühlzone (7) eingeführt wird.

**7.** Verfahren nach einem der Ansprüche 1 bis 6, wobei wenigstens ein Teil einer monophasischen Lösung dieses organischen Lösungsmittels vom unteren Teil des Kontaktreaktors (2) abgezogen wird, dieser derart gekühlt wird, dass ein Teil wenigstens der in dem Kontaktreaktor eingesetzten Reaktionswärme entfernt wird, und dieser (1) in den Kontaktreaktor rezykliert wird.

**8.** Verfahren nach einem der Ansprüche 1 bis 7, wobei das organische Lösungsmittel und das organische Kühllösungsmittel ein gleiches Lösungsmittel sind.

**9.** Verfahren nach einem der Ansprüche 1 bis 8, wobei das organische Kühllösungsmittel durch Wärmeaustausch und/oder durch einen Wasserzusatz gekühlt wird, der Schwefel in Suspension enthält, der Schwefel vom organischen Kühllösungsmittels getrennt wird und der Gasabstrom (20) durch das an Schwefel verarmte Lösungsmittel gekühlt wird.

10. Verfahren nach einem der Ansprüche 1 bis 9, gemäß dem es in einer, einen Gas-Flüssig-Kontaktreaktor (2), Mittel (3) zur Versorgung mit zu behandelndem Gas und Mitteln (1) zur Versorgung mit organischem, Katalysator enthaltendem Lösungsmittel, Mittel zur Schwefelgewinnung (25) und Mitteln (20) zum Austritt eines schwefelhaltigen Gasabstroms in Dampfform am oberen Teil des Reaktors umfassenden Vorrichtung eingesetzt wird, wobei die Vorrichtung im übrigen wenigstens ein Mittel (7) zur Kontaktierung und Kühlung des Gasabstroms umfasst, das einen triphasischen Abstrom liefert und mit dem Eingang der Mittel (20) zum Austritt des Gasabstroms und Mitteln (6, 13) zur Rezyklierung eines Kühllösungsmittels verbunden ist, Mittel (30) zur Trennung des triphasischen Abstroms, die mit dem Mittel zur Kühlung verbunden und zur Trennung des von Schwefel gereinigten Gases ausgelegt sind, und Mittel (17) zum Abziehen des gereinigten Gases, Mittel (15) zum Abziehen des Schwefels und Mittel (14) zur Gewinnung des Lösungsmittels umfasst, die mit den Mitteln (6, 13) zur Rezyklierung des Kühllösungsmittels verbunden sind.

11. Verfahren nach Anspruch 10, wobei die Mittel zur Rezyklierung des Kühllösungsmittels einen zur Kühlung des Lösungsmittels ausgelegten Wärmetauscher (40) umfassen.

12. Verfahren nach Anspruch 10, wobei die Mittel zur Rezyklierung des Lösungsmittel-Wasser-Gemischs eine Versorgung mit Zusatzwasser (16) umfassen.

13. Verfahren nach einem der Ansprüche 10 bis 12, wobei wenigstens ein Kontaktreaktor (9) zwischen die Kühlmittel (7) und die Trennmittel (30) zwischengeschaltet ist.

14. Verfahren nach einem der Ansprüche 10 bis 13, wobei der Kontaktreaktor (2) am unteren Teil ein Mittel (4) zum Abziehen einer momophasischen Lösung und Mittel (19) zur Temperaturregelung der Lösung aufweist, die einem Wärmetauscher zugeordnet und mit dem Mittel (4) zum Abziehen der Lösung und den Mitteln (1) zum Rezyklieren der monophasischen Lösung in den Kontaktreaktor verbunden sind.

15. Verfahren nach einem der Ansprüche 10 bis 14, wobei die Mittel (15) zum Abziehen des Schwefels mit dem unteren Teil des Kontaktreaktors verbunden sind.

16. Verfahren nach einem der Ansprüche 10 bis 15, wobei ein Mittel zur Trennung des Schwefels in Suspension zwischen dem Wärmetauscher (40) und /oder dem Wasserzusatz (16) und dem Mittel (7) zur Kontaktierung und Kühlung eingefügt ist.

**FIG.1**

**FIG.2**